# EUROPÄISCHE PATENTANMELDUNG

(11) **EP 0 525 496 A2**
(43) Veröffentlichungstag der Anmeldung: **03.02.1993**
(21) Anmeldenummer: 92111914.5
(22) Anmeldetag: 13.07.1992
(51) Int. Cl.: H04Q 3/545, H04M 3/24, G06F 11/30

(54) **Verfahren zum Messen von Prozedurlaufzeiten in Kommunikationssystemen**

(30) Priorität: 23.07.1991 DE 4124399
(71) Anmelder: SIEMENS AKTIENGESELLSCHAFT, D-80333 München (DE)
(72) Erfinder: Weber, Dietmar, W-8000 München 70 (DE)

(57) **Zusammenfassung**

Um zu quantitativen Aussagen über die Leistungsfähigkeit zeitgemäßer Kommunikationssysteme zu gelangen, ist es erforderlich, zeitkritische vermittlungstechnische Abläufe zu messen und zu analysieren. Dies geschieht durch Laufmessungen von Programmen. Dabei unterscheidet man absolute Laufzeitmessungen von taskbezogenen Laufzeitmessungen. Das erfindungsgemäße Verfahren zeigt eine Möglichkeit auf, solche Laufzeitmessungen durchzuführen unter Benutzung systemintegraler Prozeduranteile.

## Beschreibung

Um zu quantitativen Aussagen über die Leistungsfähigkeit zeitgemäßer Kommunikationssysteme zu gelangen, ist es erforderlich, zeitkritische vermittlungstechnische Abläufe zu messen und zu analysieren. Damit ist dann auch eine gezielte und effiziente Optimierung besonders laufzeitkritischer Abläufe möglich. Meß-und Analysegeräte für Hardware-Komponenten - beispielsweise zur Messung der Laufzeit elektrischer Signale - sind allgemein verfügbar, während eine detaillierte Messung und Analyse der Softwarekomponenten nur in beschränktem Umfang bzw. nur mit sehr großem Aufwand durchführbar ist.

Dies wird z.B. bei Zeitmessungen deutlich. So kann die Laufzeit elektrischer Signale zwischen zwei Hardwaremodulen unter der Verwendung spezieller Geräte gemessen und aufgezeichnet werden. Solche Messungen sind auch bei komplexeren Hardwarekomponenten prinzipiell möglich. Bei Softwarekomponenten gestaltet sich jedoch die Durchführung von Zeitmessungen sehr viel schwieriger. Eine Zeitmessung bedeutet in diesem Fall, daß die zeitliche Dauer des Ablaufs einer Prozedur, eines Prozesses oder eines anderen Programmoduls gemessen und aufgezeichnet wird. Generell sind die Prozeduren eines Kommunikationssystems in Softwarekomplexen, im folgenden TASK genannt, organisiert. Den TASKs werden durch eine im Betriebssystem angesiedelte Taskverwaltung Prioritäten zugeordnet. Dies bedeutet in der Praxis, daß eine TASK mit hoher Priorität solche mit niedrigerer Priorität unterbrechen, und somit in Ihrem zeitlichen Ablauf verschieben kann. Damit ist aber der zeitliche Ablauf einer TASK nicht eindeutig definiert. Somit ergeben sich zwei Definitionen einer Zeitmessung bei Softwarekomponenten:
- absolute Zeitmessungen
- taskbezogene Zeitmessungen.

Unter einer absoluten Zeit ist dabei die Dauer einer TASK vom Eintritt bis zum Rücksprung zu verstehen. Derartige Messungen berücksichtigen etwaige Unterbrechungen durch höherpriorisierte TASKs nicht und sind vor allem dann sinnvoll, wenn es sich um relativ kurze Zeiten handelt, da hier die Wahrscheinlichkeit einer prioritätengesteuerten Unterbrechung durch eine andere TASK für die praktischen Überlegungen vernachlässigt werden kann. Sollen allerdings längere Zeiten gemessen werden, so wird das Meßergebnis dadurch verfälscht, daß TASKs mit hoher Priorität die zu messende TASK unterbrechen und somit den Meßvorgang verfälschen. Um in diesen Fällen korrekte, reproduzierbare Meßergebnisse zu erhalten, müssen die Zeiten taskbezogen gemessen werden, d. h. das Meßergebnis muß um die entsprechende Unterbrechung korrigiert werden.

Aus "Sonderdruck aus Nachrichtentechnische Zeitschrift NTZ, Band 40 (1987) H.11, Seite 768 - 771, VDE-Verlag GmbH, Berlin und Offenbach", ist ein Verfahren zur Messung von Laufzeiten von Prozeduren in einem Kommunikationssystem bekannt. Diese Messungen werden von einem externen Meßsystem durchgeführt, das als Personal Computer realisiert und über eine prozessorspezifische Schnittstelle an die zu messende Hardware des Kommunikationssystems angeschlossen ist. Die beschriebene Meßmethode hat allerdings den Nachteil, daß zusätzlich zum Personal Computer spezielle Meßprozeduren bereitgestellt werden müssen. Da ein Hersteller solcher Meßsysteme auch wirtschaftliche Überlegungen anstellen muß, sind diese Meßprozeduren in ihrem Zusammenwirken mit dem Kommunikationssystem so allgemein gehalten, daß der Anschluß des Meßsystems an möglichst viele -in ihrem Hardware- und Softwarekonzept unterschiedliche - Kommunikationssysteme erfolgen kann. Dies bedeutet, daß für das Bedienen der gesamten Meßanordnung geschultes Personal erforderlich ist, das zum einen in der Lage ist, die entsprechenden Meßprozeduren zu behandeln und die Ergebnisse auszuwerten, und zum anderen detaillierte Kenntnisse über das Zusammenwirken der Prozeduren des angeschlossenen Kommunikationssystems haben muß. Insbesondere der letzte Punkt bereitet in der Praxis oft sehr große Probleme. So findet beispielsweise die Kommunikation zwischen Anwender und Meßsystem auf der untersten logischen Ebene, die durch den Austausch von Bitströmen charakterisiert ist. statt; ein Umstand, der aus der Forderung nach einer breitestmöglichen Verwendungsfähigkeit jener Meßsysteme resultiert. Weiterhin ist beim Stand der Technik als nachteilig anzusehen, daß stets nur die Aufzeichnung der Laufzeit einer einzigen TASK möglich ist. Dies bedeutet in der Praxis, daß mehrere Messungen hintereinander durchgeführt werden müssen, wenn die Laufzeiten mehrerer TASKs hintereinander aufgezeichnet werden sollen, was allerdings in der Praxis die Regel ist. So bestehen selbst einfache vermittlungstechnische Prozesse - wie beispielsweise die Bearbeitung eines "A-Teilnehmer hebt ab" Prozesses - aus einer Vielzahl von TASKs, die im Falle einer Laufzeitmessung durch das den Stand der Technik repräsentierende Verfahren nacheinander gemessen werden müssen.

Der Erfindung liegt das Problem zugrunde, ein Verfahren anzugeben, absolute - sowie taskbezogene - Laufzeitmessungen von mehreren TASKs eines Kommunikationssystems in einem Meßvorgang durchführen zu können, ohne dabei auf externe Hilfsmittel zurückgreifen zu müssen und damit einhergehend eine besonders bedienerfreundliche Benutzeroberfläche für den Anwender zu gestalten.

Die Erfindung ist ausgehend vom Oberbegriff des Patentanspruchs 1 erfindungsgemäß durch dessen kennzeichnende Merkmale definiert.

Wesentlich für die Erfindung ist das Mitausnutzen von Tabellen und Prozeduren das Kommunikationssystems, sowie bereits vorhandenen Test- und Diagnoseprozeduren, die in einer angeschlossenen Workstation ablaufen. Letztere besitzen genormte Schnittstellen zum Betriebssystem, über die der Anwender die eingangs definierten absoluten sowie sowie taskbezogenen Laufzeitmessungen durchführen kann.

Das dem Erfindungsgedanken zugrunde liegende Prinzip findet weiterhin Verwendung in der Erfindung, die ausgehend vom Oberbegriff des Patentanspruchs 2 durch dessen kennzeichnende Merkmale definiert ist.

Hier wird dem Umstand Rechnung getragen, daß zusätzliche Zwischenspeicher und Zwischenregister verwendet werden und somit logische Operationen durchgeführt werden können. Diese bestehen in einer Differenzbildung zweier Zeitwerte. Damit können die absolut gemessenen Zeitwerte um eventuelle Unterbrechungen durch höher priorisierte TASKs eliminiert werden.

Beiden Erfindungen ist gemeisam, daß die entsprechenden Messungen in der im Kommunikationssystem verwendeten Syntax durchgeführt werden können. Daher muß das die Messung durchführende Personal keinen umfangreichen Schulungen unterzogen werden. Vorteilhafte Weiterbildungen der Erfindungen ergeben sich aus den jeweiligen Unteransprüchen. Die entsprechenden Ergebnisse werden in tabellarischer Form über Drucker ausgegegeben.

Im folgenden wird die Erfindung anhand eines figürlich dargestellten Ausführungsbeispiels näher erläutert:

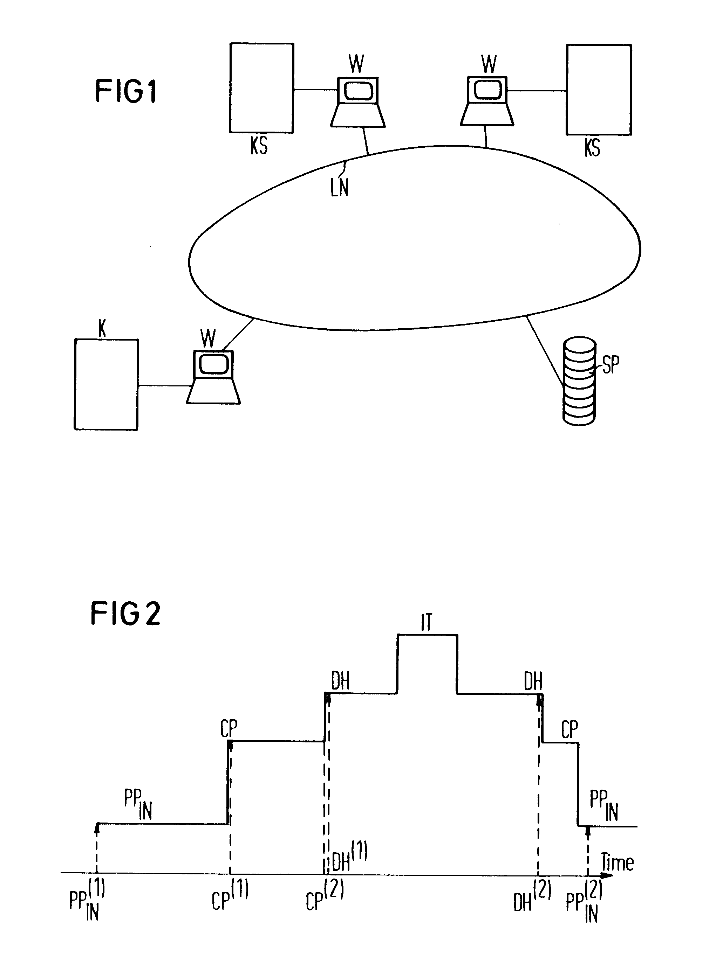

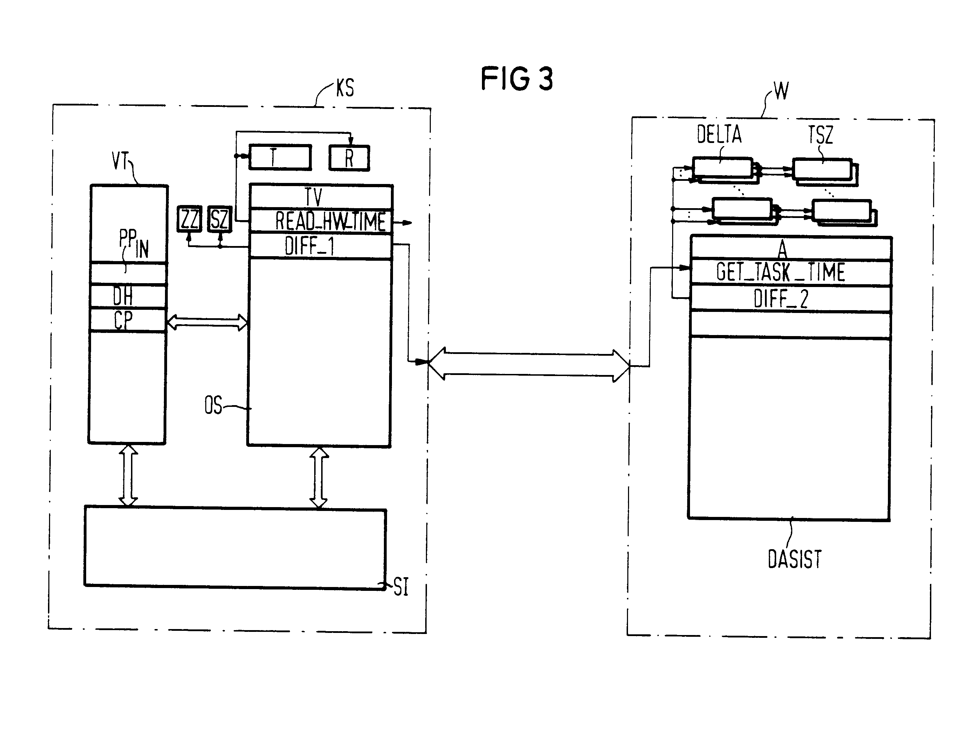

FIG 1 zeigt ein lokales Netz LN, an das Kommunikationssysteme KS über eine Workstation W angeschlossen sind. Ferner ist ein Speichermedium S an das lokale Netz LN angeschlossen. Darin sind alle Prozeduren und Tabellen aller am Netz angeschlossenen Kommunikationssysteme KS als Listing abgespeichert. In der Workstation W sind Test- und Diagnoseprozeduren DASIST abgelegt; diese werden zu Test-und Analysezwecken der Betriebssoftware des Kommunikationssystems KS verwendet. So sind hier vorwiegend Prozeduren abgelegt, über die Tracepunkte in der Betriebssoftware des Kommunikationssystems gesetzt werden können. Unter Tracepunkten versteht man allgemein die Möglichkeit des Anwenders, in Abhängigkeit von einer Bedingung einen Aufzeichnungsvorgang in einer Software zu starten oder zu beenden. So kann beispielsweise die Aufzeichnung gestartet werden, wenn ein bestimmter Code oder eine bestimmte Adresse auf dem Prozessor zum Ablauf gebracht wird. Ferner enthalten die Test-und Diagnoseprozeduren DASIST ein DEBUG-Programm. Generell versteht man darunter ein Programm, das einen detaillierten Einblick in die zu untersuchende Software sowie eventuelle Änderungen im Code erlaubt. Daher besitzen die Test- und Diagnoseprozeduren DASIST eine Schnittstelle zum Betriebssystem OS. Das Kommunikationssystem KS beinhaltet darüberhinaus ein Timerregister T. Damit werden im Kommunikationssystem KS alle Zeitvorgänge synchronisiert sowie eine Zeitbasis für Zeit/Datumsausgaben geschaffen. Das Timerregister T wird generell über eine Interruptsteuerung in einem bestimmten Intervall - im Ausführungsbeispiel 20 ms - mit einem festen Wert geladen; anschließend wird dieser Wert in dem von dem Timer vorgegebenen Zeittakt solange dekrementiert, bis der Wert O erreicht ist; dieser Vorgang ist mit dem Absetzen eines Interruptbefehls verbunden, der das Timerregister T dann wieder mit dem festen Wert lädt.

Um den erfindungsgemäßen Meß- und Analysevorgang durchführen zu können, sind im Betriebssystem OS den Test- und Diagnoseprozeduren DASIST zusätzliche Prozeduranteile hinzufügt. Im Betriebssystem OS ist eine Prozedur READ_HW_Time eingeführt; damit wird der aktuelle Zählerstand des Timerregisters T nach außen gegeben. Zum Beispiel können somit Prozeduren - wie beispielsweise die Test- und Diagnoseprozeduren - beim Aufruf der Prozedur READ HW TIME die Zählerstände des Timerregisters T auslesen und eventuell weiterverarbeiten. Um darüber hinaus Zeiten über einen längeren Zeitraum als 20 ms im System herzustellen, ist weiterhin ein zusätzlicher Zähler R eingeführt. Dieser wird bei jedem Durchlauf des Timerregisters T inkrementiert. Die Betriebssystemprozedur READ HW TIME ist derart konzipiert, daß neben dem aktuellen Zählerstand des Timerregisters T auch der Inhalt dieses Registers R übertragen wird. Somit besteht die Möglichkeit, die Zeit zwischen zwei beliebig gewählten Punkten durch Zugriff auf das Timerregister T und anschließende Differenzbildung beliebig genau zu bestimmen.

Ferner sind für Zugriffe der Prozeduren des Betriebssystems OS Zwischenzähler ZZ sowie Summenzähler SZ zur Differenzbildung und Aufsummierung der Zählerstände des Timerregisters T implementiert. Weiterhin ist eine Prozedur GET_TASK_TIME eingeführt; damit können die aktuellen Werte des Zwischenzählers ZZ und des Summenzählers SZ in die Register der aufrufenden Prozedur übertragen werden. In den Test- und Diagnoseprozeduren DASIST sind darüberhinaus Zwischenzähler D und Summenzähler S für die absolute Laufzeitmessung sowie Zwischenzähler DELTA sowie Summenzähler TSZ für die taskbezogene Laufzeitmessung eingeführt.

Fig. 2 zeigt den prinzipiellen Ablauf der Bearbeitung eines Ereignisses im Kommunikationssystem KS. Als Beispiel sei das Ereignis 'Teilnehmer - A hebt ab', beschrieben. Dieses Ereignis wird von 3 TASK's bearbeitet:
- Die TASK PP_{IN} befindet sich im Wartezustand und wird von dem Ereignis 'Teilnehmer - A hebt ab' gestartet. Physikalisch ist dieses Ereignis durch die Übertragung eines entsprechenden Impulses vom Teilnehmerendgerät realisiert. Hauptaufgabe der TASK PP_{IN} ist die Umsetzung der von den Teilnehmerendgeräten über die Teilnehmerleitung ausgesandten physikalischen Signale in logische Signale; diese logischen Signale können dann von Prozeduren der Vermittlungstechnik ausgewertet und zu weiteren TASK's zur weiteren Verarbeitung weitergeleitet werden. Hinter der TASK PP_{IN} befindet sich eine weitere TASK DH in Wartestellung. Sie ist für die unterschiedlichen Signalisierungsverfahren verantwortlich. Beispielsweise bestimmt die TASK DH, zu welchem Signalisierungsempfänger empfänger im Kommunikationssystem KS die vom Teilnehmerendgerät ausgehenden Signalisierungszeichen gesendet werden sollen. Ferner werden durch die TASK DH die Hörtongeneratoren eingeschaltet
- hinter den TASK's PP_{IN} sowie DH ist die TASK CP angesiedelt. Hierbei handelt es sich um die TASK, die die Prozeduren der Vermittlungstechnik beinhaltet. Die Steuerung der unterschiedlichen Leistungsmerkmale (wie z.B. Verbindungsaufbau, Rückruf etc.) sind hier implementiert.

Die Tasks besitzen unterschiedliche Prioritäten und können somit sich gegenseitig gemäß ihrer Priorisierung unterbrechen und somit in ihrem Ablauf verzögern, wie in Fig. 2 ausführlich dargelegt ist.

Das Ereignis 'Teilnehmer - A hebt ab' startet über einen entsprechenden Impuls die TASK PP_{IN}. Im Anschluß daran gelangen die TASK's DH, CP je nach Bedarf zum Ablauf und unterbrechen gemäß der ihnen zugewiesenen Priorisierung die TASK PP_{IN}. Daher muß im Falle einer Laufzeitmessung der TASK PP_{IN} die Dauer der Unterbrechung durch die TASK's CP, DH berücksichtigt werden.

Bevor die eigentlichen Meßvorgänge beginnen - also die absolute Laufzeitmessung sowie die Taskbezogene Laufzeitmessung - werden in der Workstation W die Test- und Diagnoseprozeduren DASIST gestartet. Hier werden die entsprechenden Tracepunkte gesetzt, sowie die am Meßprozeß zu verwendenden Register initialisiert.

### 1. Absolute Laufzeitmessung

Am Beispiel einer absoluten Laufzeitmessung der TASK PP_{IN} soll das Meßverfahren aufgezeigt werden. Die TASK PP_{IN} wird dabei in ihrem Verlauf von den TASK's DH, CP sowie der Betriebssystemtask IT unterbrochen. FIG 2 zeigt den Tracepunkt am Beginn der entsprechenden TASK. Zur Durchführung der absoluten Zeitmessung werden in der DASIST-Prozedur ein Zwischenzähler D sowie ein Summenzähler S verwendet. Nach Durchlaufen des ersten Tracepunktes PP_{IN} rufen die Test- und Diagnoseprozeduren DASIST die Betriebssystemprozedur READ_HW_TIME auf. Für die Betriebssystem-Prozedur READ HW TIME hat der "Anwender" - in diesem Fall die Test- und Diagnoseprozeduren DASIST -unmittelbaren Zugriff zu dem Timerregister T sowie dem dazugehörigen Register R. Somit wird durch diesen Betriebssystemaufruf der aktuelle Zeitwert an die Test- und Diagnoseprozeduren DASIST übergeben. Die Prozedur DIFF_1 ermittelt danach die Differenz des derart ermittelten aktuellen Zeitwertes mit dem im Zwischenzähler D abgelegten Istwert. Beim ersten Tracepunkt ist diese Differenz O. Das Ergebnis der Differenzbildung wird als Deltawert in einer entsprechenden Tabelle ausgegeben. Weiterhin wird dieser Deltawert im Zwischenzähler D abgespeichert sowie im Summenzähler S aufaddiert und anschließend als Summenwert tabellarisch ausgegeben.

Im späteren Verlauf verdrängt die TASK CP die TASK PP_{IN}. Nach Durchlauf des zweiten Tracepunktes CP(1) erfolgt das Rechnungsverfahren der Delta- bzw. Summenwerte analog wie soeben erläutert. In diesem Meßverfahren ist eine eventuelle zeitliche Verdrängung der TASK PP_{IN} durch weitere, höherpriorisierte TASKs insofern nicht berücksichtigt als daß die Laufzeitmessung für diese Zeiten nicht supendiert wird. Zur Optimierung vermittlungstechnischer Prozeduren ist darüber hinaus oft die Kenntnis der reinen TASK- bezogenen Laufzeit vonnöten. Zu diesem Zweck müssen die absoluten Zeiten um die entsprechenden Unterbrechungen durch höherpriorisierte TASKs korrgiert werden.

### 2. Taskbezogene Laufzeitmessung.

Zur Durchführung taskbezogener Laufzeitmessungen werden zunächst spezielle Register für Zugriffe der Prozeduren des Betriebssystems OS angelegt; dabei handelt es sich um Zwischenzähler ZZ sowie Summenzähler SZ. Darüber hinaus werden weitere Zwischenzähler DELTA sowie Summenzähler TSZ eingeführt. Diese Zähler können nur von den Test- und Diagnoseprozeduren DASIST bearbeitet werden. Letztere sind pro TASK einmal vorhanden.

Die taskbezogene Laufzeitmessung wird durch Initialisieren aller am Meßvorgang beteiligten Zähler und Register gestartet. In einem ersten Schritt mißt eine Prozedur DIFF alle Zeitintervalle der zu messenden TASK, in der die TASK ohne Unterbrechung durch höherpriorisierte TASKs abläuft. Dies geschieht, indem die Prozedur DIFF_2 über die Timerprozedur READ_HW_TIME den aktuellen Zählerstand ermittelt und in einem zweiten Schritt einen Vergleich mit einem im Zwischenzähler ZZ abgelegten Istwert vollzieht. Das Ergebnis dieses Vergleichs wird im Summenzähler SZ aufsummiert. Bei Durchlaufen eines jeden Tracepunktes werden die entsprechenden Zählerstände des Zwischenzählers ZZ sowie des Summenregisters S durch die Prozedur GET_TASK_TIME in die Zwischenzähler DELTA und den Summenzähler TSZ geladen. Anschließend findet über eine Ausgabeprozedur OUT die Ausgabe jener Zähler auf Bildschirm statt.

Besonders vorteilhaft an der Erfindung ist anzusehen, daß der Anwender auf entsprechende im System bereits vorhandene Prozeduren und Tabellen zurückgreifen kann. Damit wird eine Kommunikation zwischen Anwender und Kommunikationssystem insofern erleichtert, als die Test- und Diagnoseprozeduren DASIST sowie die Software eine einheitliche Syntax besitzen. Damit kann der Anwender bei gleichem Meßvorgang symbolische Namen für Prozeduren, TASKs, Tabellen und Adressen verwenden. Ein weiterer Vorteil ist darüberhinaus, daß bei Einsatz einer neuen Rechnergeneration die Meßmethode sofort verfügbar ist, und somit keine neue prozessorspezifische Meßhardware entwickelt werden muß.

## Patentansprüche

1. Verfahren zum Messen von Prozedurlaufzeiten eines Kommunikationssystems (KS) mit
- in TASKs organisierten Betriebssystemprozeduren, Vermittlungstechnikprozeduren und Sicherheitstechnikprozeduren, wobei jeder TASK von einer zentralen Taskverwaltung (TV) des Betriebssystems (OS) eine Ablaufpriorität zugewiesen wird, gemäß der die TASKs sich unterbrechen und in ihrem zeitlichen Ablauf verschieben,
- Test- und Diagnoseprozeduren (DASIST), die auf einer an das Kommunikationssystem (KS) angeschlossenen Workstation (W) ablaufen, und über die Tracepunkte in den TASKs des Kommunikationssystems (KS) gesetzt werden, und
- einem Timerregister (T) zur Steuerung der zeitlichen Abläufe, auf das Prozeduren des Betriebssystems (OS) zugreifen können, und das von einer betriebssystemimmanenten Interrupt-TASK in einem festen Zeitraster mit einem festen Zahlenwert rythmisch geladen wird
dadurch gekennzeichnet, daß
- allen TASKs jeweils ein Register mit einem Zwischenzähler (D) und einem Summenzähler (S) für Zugriffe der Test-und Diagnoseprozeduren (DASIST) zugeordnet ist,
- eine Timerprozedur (READ_HW_TIME) den aktuellen Zählerstand des Timerregisters (T) an nicht dem Betriebssystem (OS) angehörende Prozeduren überträgt,
- beim Durchlauf jedes Tracepunktes eine Differenzbildungs-Prozedur (DIFF_1) den zeitlichen Ablauf der TASK vom Eintritt bis zu ihrem Rücksprung, unabhängig vom Unterbrechungszustand durch höherpriorisierte TASKs, mißt, derart bestimmt, daß sie durch Aufruf der Timerprozedur (READ_HW_TIME) den aktuellen Zählerstand ermittelt, mit einem im ersten Zwischenzähler (D) abgelegten Istwert vergleicht, den daraus resultierenden Differenzwert im ersten Summenzähler (S) ablegt und den aktuellen Zählerstand im ersten Zwischenzähler (D) abspeichert.

2. Verfahren nach dem Oberbegriff des Patentanspruchs 1,
dadurch gekennzeichnet, daß
- allen TASKs Jeweils ein erstes Register mit ersten Zwischenzähler (ZZ) und ersten Summenzähler (SZ) für Zugriffe der Prozeduren des Betriebssystems (OS) und jeweils ein zweites Register mit einem zweiten Zwischenzähler (DELTA) und zweiten Summenzähler (TSZ) für Zugriffe der Test- und Diagnoseprozeduren (DASIST) zugeordnet ist,
- eine Übertragungsprozedur (GET TASK TIME) die Zählerstände der ersten Register zu nicht dem Betriebssystem (OS) angehörenden Prozeduren überträgt,
- eine Differenzbildungs-Prozedur (DIFF_2) alle Zeitintervalle der zu messenden TASK mißt, in denen diese TASK ohne Unterbrechung durch höherpriorisierte TASKs abläuft, indem die Differenzbildungs-Prozedur (DIFF_2) über eine Timerprozedur (READ HW TIME) den aktuellen Zählerstand ermittelt, ein Vergleich mit einem im ersten Zwischenzähler (ZZ) abgelegten Istwert durchführt und den daraus resultierenden Differenzwert im ersten Summenregister (SZ) aufsummiert, und
- bei Durchlaufen eines jeden Tracepunktes die Test- und Diagnoseprozeduren (DASIST) durch Aufruf der Übertragungsprozedur (GET_TASK_TIME) die aktuellen Zählerstände der ersten Register in die jeweiligen zweiten Register übertragen.

3. Verfahren nach Anspruch oder 1 oder 2,
dadurch gekennzeichnet,
daß das Timerregister (T) um ein zusätzliches Zählregister (R) erweitert ist, dessen Zählerstand im Falle des Ablaufs des Timerregisters (T) inkrementiert wird.

4. Verfahren nach Anspruch 1 oder 2,
dadurch gekennzeichnet,
daß bei Aufruf der Timerprozedur (READ_HW_TIME) der Stand des Zählregisters (R) mit dem Speicherinhalt des Timerregisters (T) übertragen wird.

5. Verfahren nach Anspruch 1 oder 2,
dadurch gekennzeichnet,
daß Ausgabeprozeduren (OUT) die Werte aller Zwischenzähler und Summenzähler Je TASK tabellarisch ausgeben.
